# EUROPEAN PATENT SPECIFICATION

(11) **EP 3 296 366 B1**
(45) Date of publication and mention of the grant of the patent: **10.07.2019**
(21) Application number: 16792647.6
(22) Date of filing: 09.05.2016
(51) Int. Cl.: C09D 9/00, C08J 11/06, C11D 7/26, C11D 7/30, C11D 7/32, C08J 11/20, C11D 7/50

(54) **RELEASE SOLVENT COMPOSITION, RELEASE METHOD, AND CLEANING SOLVENT COMPOSITION**
FREISETZUNGSLÖSUNGSMITTELZUSAMMENSETZUNG, FREISETZUNGSVERFAHREN UND REINIGUNGSLÖSUNGSMITTELZUSAMMENSETZUNG
COMPOSITION DE SOLVANT DE DÉMOULAGE, PROCÉDÉ DE DÉMOULAGE, ET COMPOSITION DE SOLVANT DE NETTOYAGE

(30) Priority: 14.05.2015 JP 2015098865; 28.07.2015 JP 2015148240
(43) Date of publication of application: 21.03.2018
(73) Proprietor: Zeon Corporation, Tokyo 100-8246 (JP)
(72) Inventor: ANDO, Keiji, Tokyo 100-8246 (JP); OTSUKI, Noriyasu, Tokyo 100-8246 (JP)
(74) Representative: Beckmann, Claus
(86) International application number: PCT/JP2016/063708
(87) International publication number: WO 2016/181922

(56) References cited:
- EP-A1- 0 670 365
- WO-A1-2008/073408
- JP-A- 2001 240 897
- JP-A- 2009 215 409
- JP-A- 2011 031 144
- JP-A- 2013 035 205

## Description

### {Technical Field}

The present invention relates to a release solvent composition which can be suitably used for releasing a thermosetting resin coating film coated on a thermoplastic resin, a release method using the release solvent composition, and a cleaning solvent composition suitable for cleaning of a machining oil, grease, wax, which is used to process metals, ceramics or plastic materials in the precision machinery parts industry or the electric/electronic parts industry.

### {Background Art}

A thermoplastic resin such as a polypropylene resin, an ABS resin, polystyrene or polyethylene is inexpensive, highly versatile, and excellent in various physical properties, and thus is widely used as an automobile exterior member. Further, the appearance and durability of the automobile exterior member are required, and thus the thermoplastic resin is coated with a thermosetting resin coating film such as a urethane resin and an acrylic resin. When the automobile exterior member is directly reused, the physical properties of the regenerated thermoplastic resin molded article are reduced by an influence of the thermosetting resin coating film (hereinafter sometimes referred to as "coating film"). Accordingly, in order to reuse the automobile exterior member obtained by using the thermoplastic resin with the thermosetting resin coating film coated thereon (hereinafter sometimes referred to as "thermoplastic resin molded article"), it is necessary to release the coating film, and there has been proposed a method of releasing the coating film from the thermoplastic resin molded article (hereinafter sometimes referred to as "molded article").

For example, Patent Literature 1 suggests a release solvent composition including γ-butyrolactone, oxalic acid, and water for releasing a coating film from a resin bumper. The release performance of the method is low and the method is a system in which water is present, and thus there have been problems in the step of removing the release solvent composition and drying. Further, the release solvent composition has had a flash point.

Further, Patent Literature 2 proposes a method of using cyclohexanone to release a coating film of a propylene-based resin molded article. Since cyclohexanone is a combustible solvent, this method has been required to take strict fire prevention measures and static electricity prevention measures from the viewpoint of ensuring the safety in a releasing step. Further, since cyclohexanone is removed by rinsing with water, a waste water processing step has been needed.

Further, Patent Literature 3 proposes a release solvent composition including a higher alcohol, ester, and ether having a boiling point of 100°C or more. Since this release solvent composition contains propylene glycol monomethyl ether as a main ingredient, there has been a need for fire prevention measures and static electricity prevention measures in a release device such as a processing tank. Further, since water is used in order to separate a coating film from a molded article, the waste water processing step has been needed.

Patent Literature 4 proposes a release solvent composition containing at least one of d-limonene or benzyl alcohol and butyl cellosolve, and Patent Literature 5 proposes a release solvent composition containing at least one of aromatic alcohol or glycol ether. This method also uses water in order to remove the release solvent composition from a molded article, and thus a great energy is needed for the drying step and further it has been necessary to waste the cleaning water.

As described above, the conventional proposal has had a big problem in fire prevention measures and static electricity prevention measures in the release device, removal of the release solvent composition from the molded article after the releasing step, the waste water processing, or the like because of the use of an inflammable release solvent composition.

Meanwhile, Patent Literature 6 proposes a method of releasing a coating film from a molded article using a cyclic compound C₅H₃F₇ having no flash point (product name: ZEORORA (registered trademark) HTA, manufactured by ZEON CORPORATION). However, as described in Patent Literature 6, the immersion of a ground product of the molded article in the cyclic compound C₅H₃F₇ has not resulted in complete release of the coating film in some cases.

Recently, a thermoplastic resin molded article with a thermosetting resin coating film, which is hardly damaged or easily self-repaired even when damaged, coated thereon is used for an automobile exterior member such as a bumper, and thus the performance of the thermoplastic resin molded article has become higher. Consequently, it has become difficult to release the coating film completely by immersion in the cyclic compound C₅H₃F₇.

Therefore, there is a need for a release solvent composition and a release method which can release the thermosetting resin coating film more efficiently.

Further, in the precision machinery parts industry or the electric/electronic parts industry, an machining oil (such as a cutting oil, a pressing oil, a drawing oil or a rolling oil), wax/grease for fixing a material, or solder flux is generally used in processing metal materials, ceramics, plastics materials or the like. Normally, when being produced into an intermediate product before proceeding to the next step or a final product, these are removed to clean the surface.

Conventionally, a chlorinated solvent has been widely used to remove these, and has been replaced with a fluorinated solvent because of the toxicity or environmental pollution problems. Among the fluorinated solvents, a mixture of 3,3-dichloro-1,1,2,2-pentafluoropropane and 1,3-dichloro-1,1,2,2,3-pentafluoropropane (HCFC-225) having an excellent cleaning performance is widely used. However, since the ozone depletion potential and warming potential are high, the production thereof is set to be stopped in 2020.

Accordingly, as alternate products of HCFC-225, hydrofluoroether (HFE) and hydrofluorocarbon (HFC) having a low ozone depletion potential are put to practical use. However, when these products are used singly, they exhibit no cleaning performance, and thus they have been problematic as the cleaning solvents.

Since HFE and HFC as non-chlorine fluorinated compounds have properties of mutually dissolving a glycol ether, as disclosed in Patent Literatures 7 and 8, a cleaning solvent composition which consists of HFE or HFC and a glycol ether and has no flash point is proposed.

Further, Patent Literature 9 discloses a non-flammable cleaning agent which consists of a cyclic hydrofluorocarbon and a cleaning ingredient whose vapor pressure at 20°C and 1.013 × 10⁵ Pa is less than 1.33 × 10³ Pa. Examples of the cleaning ingredient include a glycol ether, a hydrocarbon, and an alcohol. However, there is no disclosure of the mutual solubility between the exemplified alcohol and cyclic hydrofluorocarbon, and there is a disclosure of the solubility of a glycol ether and a composition consisting of a cyclic hydrofluorocarbon and lower alcohol.

Patent Literature 10 discloses a cleaning agent which consists of a non-chlorine fluorinated compound, an organic compound containing an ether bond and/or an ester bond, and an alcohol and whose flash point is controlled. Examples of the alcohol include n-hexanol and n-octanol. Patent Literature 10 discloses a cleaning solvent composition whose cleaning performance is improved by adding a glycol ether.

However, when 1,1,2,2,3,3,4-heptafluorocyclopentane (product name: ZEORORA (registered trademark) H, manufactured by ZEON CORPORATION) exemplified as the non-chlorine fluorinated compound is used as the cleaning agent, the concentration of the glycol ether which can be added to the cleaning solvent composition is limited in view of inflammable problems. This has resulted in the impossibility of improving the cleaning performance.

### {Citation List}

### {Patent Literature}

Patent Literature 1: JP 7-166113 A
Patent Literature 2: JP 2003-48210 A
Patent Literature 3: JP 2005-119134 A
Patent Literature 4: JP 2013-237719 A
Patent Literature 5: JP 2014-151581 A
Patent Literature 6: JP 2012-30467 A
Patent Literature 7: JP 2001-279298 A
Patent Literature 8: JP 2001-240897 A
Patent Literature 9: JP 2001-131593 A
Patent Literature 10: JP 2001-240898 A

### {Summary of Invention}

### {Technical Problem}

A first object of the present invention is to provide a release solvent composition for efficiently releasing a thermosetting resin coating film coated on a thermoplastic resin molded article by a simple facility and a simple step, and a release method using the release solvent composition.

A second object of the present invention is to provide a cleaning solvent composition capable of avoiding inflammable problems and improving the cleaning performance of 1,1,2,2,3,3,4-heptafluorocyclopentane which is a non-chlorine fluorinated compound having low toxicity, a low ozone depleting potential, and a low warming potential.

### {Solution to Problem}

The present inventors have been dedicated to making repetitive studies, and as a result, they have found out that the first and second objects can be achieved by mixing (a) 1,1,2,2,3,3,4-heptafluorocyclopentane with a predetermined ingredient, and completed the present invention.

That is, the present invention provides the following:
(1) A release solvent composition for releasing a thermosetting resin coating film coated on a thermoplastic resin molded article, the release solvent composition containing: 1,1,2,2,3,3,4-heptafluorocyclopentane and an aromatic alcohol, in which the release solvent composition has no flash point;
(2) The release solvent composition according to (1), wherein when a weight of the 1,1,2,2,3,3,4-heptafluorocyclopentane is represented by A and a weight of the aromatic alcohol is represented by B, a weight ratio (A/B) of the 1,1,2,2,3,3,4-heptafluorocyclopentane to the aromatic alcohol is greater than 30/70 and less than 70/30;
(3) The release solvent composition according to (1) or (2), in which the aromatic alcohol includes at least one of benzyl alcohol and phenethyl alcohol;
(4) The release solvent composition according to any one of (1) to (3), further containing an alcohol which forms an azeotropic mixture with 1,1,2,2,3,3,4-heptafluorocyclopentane;
(5) The release solvent composition according to (4), in which the alcohol is tert-amyl alcohol;
(6) The release solvent composition according to any one of (1) to (5), further containing at least one selected from a glycol ether, a glycol ether acetate and γ-butyrolactone;
(7) The release solvent composition according to (6), in which when a weight of the aromatic alcohol is represented by B and a weight of at least one selected from the glycol ether, the glycol ether acetate and the γ-butyrolactone is represented by C, a weight ratio (C/B) of at least one selected from the glycol ether, the glycol ether acetate and the γ-butyrolactone to the aromatic alcohol is greater than 20/80 and less than 80/20;
(8) The release solvent composition according to (6) or (7), in which at least one selected from the glycol ether, the glycol ether acetate and the γ-butyrolactone is at least one of 3-methoxy-3-methylbutanol and 3-methoxy-3-methylbutyl acetate;
(9) The release solvent composition according to any one of (1) to (8), further containing a phenolic antioxidant;
(10) A release method including: an immersing step of immersing the thermoplastic resin molded article on which the thermosetting resin coating film is coated in the release solvent composition according to any one of (1) to (9) and releasing the thermosetting resin coating film; a cleaning step of rinsing and vapor cleaning the release solvent composition remaining on the thermoplastic resin molded article and/or the thermosetting resin coating film after the immersing step with a solvent that contains 1,1,2,2,3,3,4-heptafluorocyclopentane as a main ingredient; and a drying step of drying the thermoplastic resin molded article and/or the thermosetting resin coating film after the cleaning step.
(11) A cleaning solvent composition containing: 1,1,2,2,3,3,4-heptafluorocyclopentane and a first aromatic alcohol, in which the cleaning solvent composition has no flash point;
(12) The cleaning solvent composition according to (11), in which when a weight of the 1,1,2,2,3,3,4-heptafluorocyclopentane is represented by A and a weight of the first aromatic alcohol is represented by B, a weight ratio (A/B) of the 1,1,2,2,3,3,4-heptafluorocyclopentane to the first aromatic alcohol is greater than 30/70 and less than 90/10;
(13) The cleaning solvent composition according to (11) or (12), in which the first aromatic alcohol includes at least one of benzyl alcohol and phenethyl alcohol;
(14) The cleaning solvent composition according to any one of (11) to (13), further containing an alcohol which forms an azeotropic mixture with 1,1,2,2,3,3,4-heptafluorocyclopentane;
(15) The cleaning solvent composition according to (14), in which the alcohol is tert-amyl alcohol;
(16) The cleaning solvent composition according to any one of (11) to (15), further containing a phenolic antioxidant;
(17) The cleaning solvent composition according to any one of (11) to (16), further containing an ether having a structure in which a second aromatic alcohol is condensed with a third aromatic alcohol or an aliphatic alcohol;
(18) The cleaning solvent composition according to (17), in which when a weight of the first aromatic alcohol is represented by B and a weight of the ether is represented by F, a weight ratio (B/F) of the first aromatic alcohol to the ether is greater than 80/20 and less than 1/99; and
(19) The cleaning solvent composition according to (17) or (18), wherein the ether includes at least one of dibenzyl ether and methylbenzyl ether.

### {Advantageous Effects of Invention}

The present invention provides a release solvent composition for efficiently releasing a thermosetting resin coating film coated on a thermoplastic resin molded article by a simple facility and a simple step, and a release method using the release solvent composition.

The present invention provides a cleaning solvent composition capable of avoiding inflammable problems and improving the cleaning performance of 1,1,2,2,3,3,4-heptafluorocyclopentane which is a non-chlorine fluorinated compound having low toxicity, a low ozone depleting potential, and a low warming potential.

### {Brief Description of Drawings}

FIG. 1 is a view illustrating an outline of a release device to be used in a release method according to a first embodiment of the present invention.
FIG. 2 is a view illustrating an outline of a cleaning device to be used in the release method according to the first embodiment of the present invention.
FIG. 3 is a view illustrating an outline of a cleaning device for cleaning a target to be cleaned using a cleaning solvent composition according to a second embodiment of the present invention.
FIG. 4 is a view illustrating an outline of an oil removing device for removing an oil content from a liquid put into a cleaning tank of the cleaning device of FIG. 3.

### {Description of Embodiments}

### (First Embodiment)

Hereinafter, the release solvent composition and the release method according to the first embodiment of the present invention will be explained with reference to the drawings. The release solvent composition according to the first embodiment of the present invention is a release solvent composition for releasing a thermosetting resin coating film coated on a thermoplastic resin molded article, the release solvent composition contains (a) 1,1,2,2,3,3,4-heptafluorocyclopentane and (b) an aromatic alcohol and has no flash point.

Further, the release method according to the first embodiment of the present invention includes: an immersing step of immersing the thermoplastic resin molded article on which the thermosetting resin coating film is coated in the above release solvent composition and releasing the thermosetting resin coating film; a cleaning step of rinsing and vapor cleaning the release solvent composition remaining on the thermoplastic resin molded article and/or the thermosetting resin coating film after the immersing step with a solvent that contains 1,1,2,2,3,3,4-heptafluorocyclopentane as a main ingredient; and a drying step of drying the thermoplastic resin molded article and/or the thermosetting resin coating film after the cleaning step.

Examples of the thermoplastic resin to be used for the thermoplastic resin molded article, mentioned in the present invention, include resins such as a polypropylene-based resin, a polyethylene-based resin, an ABS resin, a polystyrene resin, a polycarbonate resin, a polyacetal resin, a nylon resin, and a methacrylic resin; resins obtained by adding a rubber ingredient to these resins; and resin systems with these resins mixed therein. Further, "the thermoplastic resin molded article" is an article molded into an automobile exterior member or the like (e.g., application for a bumper for automobile) and a thermosetting resin coating film is formed on the surface of the above thermoplastic resin. Further, "the thermosetting resin coating film" is used for a normal coating film, and examples thereof include thermosetting resin coating films consisting of a urethane resin, an acrylic resin, a melamine-based resin, an epoxy resin, an alkyd resin or the like.

### (Release Solvent Composition)

The release solvent composition according to the first embodiment of the present invention is a release solvent composition which contains at least (a) 1,1,2,2,3,3,4-heptafluorocyclopentane and (b) an aromatic alcohol and has no flash point. Here, the wording "has no flash point" means that the release solvent composition is recognized to have no flash point by a general evaluation test of flash point such as JIS K2265.

Further, the release solvent composition according to the first embodiment of the present invention preferably contains (a) 1,1,2,2,3,3,4-heptafluorocyclopentane (hereinafter sometimes referred to as "ingredient (a)"), (b) an aromatic alcohol (hereinafter sometimes referred to as "ingredient (b)"), (c) at least one selected from glycol ether, glycol ether acetate, and γ-butyrolactone (hereinafter sometimes referred to as "ingredient (c)"), and/or (d) a phenolic antioxidant (hereinafter sometimes referred to as "ingredient (d)"). Further, the release solvent composition according to the first embodiment preferably contains (e) an alcohol (hereinafter sometimes referred to as "ingredient (e)").
(a) The 1,1,2,2,3,3,4-heptafluorocyclopentane contained in the release solvent composition according to the first embodiment of the present invention has no flash point.

Further, specific examples of (b) the aromatic alcohol contained in the release solvent composition according to the first embodiment of the present invention include benzyl alcohol, methylbenzyl alcohol, ethylbenzyl alcohol, methoxybenzyl alcohol, ethoxybenzyl alcohol, hydroxybenzyl alcohol, 3-phenylpropanol, cumyl alcohol, furfuryl alcohol, phenethyl alcohol, methoxy phenethyl alcohol, and ethoxy phenethyl alcohol. Among these, benzyl alcohol and phenethyl alcohol are preferred.

Further, specific examples of the glycol ether which can be used as the ingredient (c) include 3-methoxy-3-methylbutanol, 3-methoxybutanol, propylene glycol monomethyl ether, propylene glycol monobutyl ether, dipropylene glycol monomethyl ether, and dipropyleneglycol monobutyl ether.

Further, specific examples of the glycol ether acetate which can be used as the ingredient (c) include acetate of monoalkyl ether corresponding to propylene glycol, dipropylene glycol or the like, 3-methoxy butyl acetate, and 3-methoxy-3-methylbutyl acetate.

Further, (e) the alcohol is preferably an alcohol which forms an azeotropic mixture with (a) 1,1,2,2,3,3,4-heptafluorocyclopentane and more preferably tert-amyl alcohol.

Further, specific examples of (d) the phenolic antioxidant include phenol, 2,6-di-t-butylphenol, 2,6-di-t-butyl-p-cresol (hereinafter sometimes referred to as "BHT"), and butylhydroxylanisole. Among these, 2,6-di-t-butyl-p-cresol (BHT) is preferred from the viewpoint of a high antioxidant effect.

The weight ratio of each ingredient in the release solvent composition according to the first embodiment of the present invention is not particularly limited as long as it is within the range that does not impair the release performance and non-flammability. When the weight of (a) the 1,1,2,2,3,3,4-heptafluorocyclopentane is represented by A and the weight of (b) the aromatic alcohol is represented by B, the weight ratio (A/B) of (a) the 1,1,2,2,3,3,4-heptafluorocyclopentane to (b) the aromatic alcohol is preferably greater than 30/70 and less than 70/30. The weight ratio of (b) the aromatic alcohol is within the above range, thereby reducing a phenomenon in which the release performance for releasing various thermosetting resin coating films cannot be sufficiently exerted due to the very low weight ratio of (b) the aromatic alcohol, and thereby also reducing a phenomenon in which it becomes difficult to obtain the release solvent composition which has no flash point due to the very high weight ratio of (b) the aromatic alcohol.

In the case of further adding the ingredient (c), when the weight of the ingredient (c) is C and the weight of (b) the aromatic alcohol is represented by B, the weight ratio (C/B) of the ingredient (c) to (b) the aromatic alcohol is preferably greater than 20/80 and less than 80/20. The weight ratio of the ingredient (c) is within the above range, thereby reducing a phenomenon in which the release performance for releasing various thermosetting resin coating films cannot be sufficiently exerted due to the very low weight ratio of the ingredient (c) and thereby also reducing a phenomenon in which it becomes difficult to obtain the release solvent composition which has no flash point due to the very high weight ratio of the ingredient (c) .

The addition amount when (d) the phenolic antioxidant is further added is preferably from 1 to 1000 ppm and more preferably from 10 to 500 ppm based on the total amount of (a) the 1,1,2,2,3,3,4-heptafluorocyclopentane, (b) the aromatic alcohol, and the ingredient (c) and (e) the alcohol to be added if necessary.

To the release solvent composition according to the first embodiment of the present invention, a surfactant can be added as needed. The surfactant is preferably a nonionic surfactant. Examples of the nonionic surfactant include a polyoxyethylene alkyl ether, a polyoxyethylene sorbitan fatty acid ester, a polyoxyethylene glycerin fatty acid ester, and fatty acid amine salt.

Subsequently, the release method of releasing a thermosetting resin coating film from a thermoplastic resin molded article on which the thermosetting resin coating film is coated (hereinafter sometimes referred to as "target to be released") using the release solvent composition according to the first embodiment of the present invention will be explained. In the release method using the release solvent composition of the present invention, the release solvent composition permeates into the thermosetting resin coating film coated on the thermoplastic resin molded article, thereby allowing the coating film to swell. As a result, the coating film itself expands, whereby a part of the film was released from the surface of the thermoplastic resin molded article, and further the released portion causes release of the coating film surrounding it from the surface of the article.

Further, the release solvent composition permeates into the coating film and thus the coating film swells, whereby the adhesive strength of the coating film to the thermoplastic resin molded article is reduced. As a result, the coating film can be pulled apart from the molded article by applying a slight mechanical force. Here, examples of the mechanical force include force generated by rubbing or hitting the coating film with the thermoplastic resin molded article or a polishing material to be used as needed, or vibrating the film with ultrasonic waves.

### (Release Method)

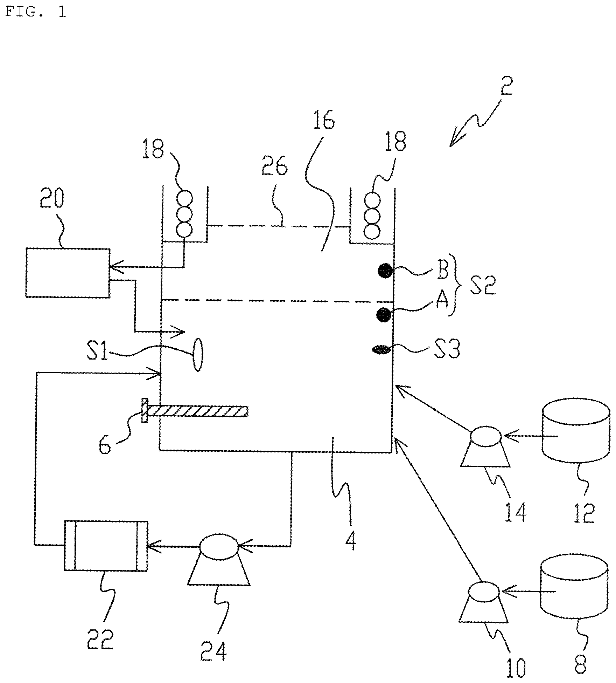

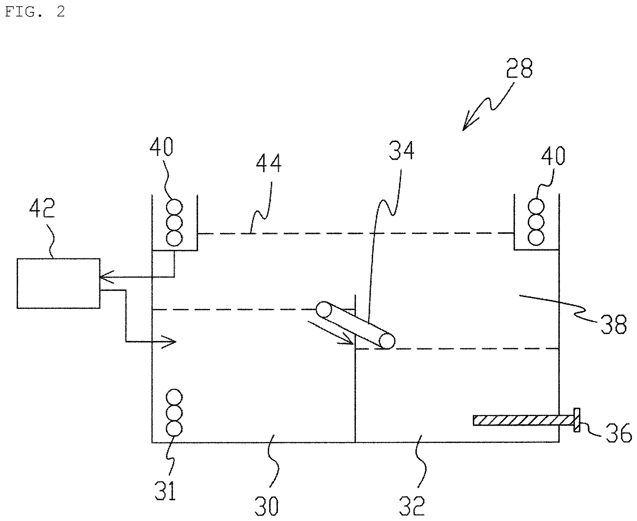

Hereinafter, the release method according to the first embodiment of the present invention will be more specifically explained with reference to FIGs. 1 and 2. FIG. 1 is a view illustrating an outline of a release device to be used in a release method of the present invention and FIG. 2 is a view illustrating an outline of a cleaning device to be used in the release method of the present invention. Note that, the release device and the cleaning device which can be used in the release method according to the first embodiment of the present invention are not limited to those illustrated in FIGs. 1 and 2, respectively.

A release device 2 illustrated in FIG. 1 includes a release tank 4 into which the release solvent composition is introduced, a heater 6 that heats the release solvent composition in the release tank 4, a release solvent composition tank 8 that stores the release solvent composition, a release solvent composition pump 10 that supplies the release solvent composition from the release solvent composition tank 8 to the release tank 4, a supply liquid tank 12 that stores a supply liquid containing (a) 1,1,2,2,3,3,4-heptafluorocyclopentane as a main ingredient, a supply liquid pump 14 that supplies the supply liquid from the supply liquid tank 12 to the release tank 4, a vapor phase 16 that has the release solvent composition vaporized by heating by the heater 6, a release tank cooling coil 18 that cools the vaporized release solvent composition present in the vapor phase 16, a release tank water separator 20 that removes the water content from the release solvent composition cooled by the release tank cooling coil 18, a filter 22 that removes the coating film released in the release tank 4 from the release solvent composition in the release tank 4, a pump 24 that feeds the release solvent composition in the release tank 4 to the filter 22, a release tank temperature sensor S1 that measures the liquid temperature of the release solvent composition in the release tank 4, a release tank liquid surface sensor S2 that includes a sensor A placed in the liquid of the release solvent composition in the release tank 4 and a sensor B placed above the liquid surface and detects whether the liquid surface reaches a predetermined height, and a release tank concentration sensor S3 that measures the concentration of (a) the 1,1,2,2,3,3,4-heptafluorocyclopentane or the like in the release solvent composition in the release tank 4. Further, a vapor phase interface 26 of the release tank is present at the top part of the vapor phase 16 in FIG. 1.

Further, a cleaning device 28 illustrated in FIG. 2 includes a rinse tank 30 that rinses the target to be released whose coating film is released by the release device 2 with a rinse tank liquid, a rinse tank cooling coil 31 that cools the rinse tank liquid in the rinse tank 30, a vapor tank 32 that performs vapor cleaning on the target to be released using the vapor in the vapor tank 32 after being rinsed with the rinse tank liquid, an overflow pipe 34 that feeds the rinse tank liquid from the rinse tank 30 to the vapor tank 32, a heater 36 that heats the rinse tank liquid in the vapor tank 32, a vapor phase 38 that has the rinse tank liquid vaporized by heating by the heater 36, a cleaning device cooling coil 40 that cools the vaporized release solvent composition present in the vapor phase 38, and a cleaning device water separator 42 that removes the water content from the release solvent composition cooled by the cleaning device cooling coil 40. Further, a vapor phase interface 44 is present at the top part of the vapor phase 38 in FIG. 2.

Here, the rinse tank liquid is preferably a solvent containing the ingredient (a) as a main ingredient and may contain the release solvent composition itself of the present invention or the alcohol in the range that does not impair the vapor cleaning function. In the case of containing these, it is preferable to form an azeotropic composition from the viewpoint of the possibility of predicting the flash point. Ingredients other than the ingredient (a) are contained in the rinse tank liquid and an azeotropic composition is formed, thereby reducing a phenomenon in which, during cleaning, the composition of the release solvent composition is changed by the addition of an alcohol or another compound which does not form an azeotropic mixture with the ingredient (a) and thus the concentration of an inflammable compound such as the alcohol is increased, whereby the flash point appears. The alcohol which forms an azeotropic composition is, for example, tert-amyl alcohol. Note that, the solvent containing the ingredient (a) as the main ingredient is used in vapor cleaning.

When the releasing step is performed using the release device 2 illustrated in FIG. 1, a thermoplastic resin molded article with a thermosetting resin coating film coated thereon is first stored in a predetermined container. Here, pores or meshes for introducing the release solvent composition into the container are formed in the container. Further, the container is configured so that a mechanical force such as shaking or rotating can be added to the target to be released.

The term "the container to which the mechanical force can be applied" means a container which can apply the mechanical force to the introduced target to be released by rotation or vibration of the container itself. Examples of the container include containers in which the target to be released is rubbed by the contact of the container with the target to be released or the target to be released is hit by the collision of the container with the target to be released.

Further, a polishing material may be added to a container storing the thermoplastic resin molded article. Further, a projection for efficiently moving the target to be released and the polishing material in the container is preferably provided in the container.

Further, the thermoplastic resin molded article to be stored in the container is preferably formed into a small piece using a crusher. For example, a thermoplastic resin molded article having a 1 to 150 mm square size is preferred.

Then, the predetermined container storing the thermoplastic resin molded article is immersed in the release solvent composition in the release tank 4 which has been heated to a predetermined temperature by the heater 6. Thereafter, the container is shaken or rotated and moved so as to apply a mechanical force to the target to be released in the container.

Here, the temperature (release temperature) of the release solvent composition in the release tank 4 to be heated by the heater 6 is not particularly limited unless the release performance is impaired. Taking into consideration the time required for the releasing step and the concentration control, the temperature is preferably a boiling temperature of the release solvent composition.

When the coating film is released from the target to be released by the release device 2, the concentration of each of the ingredients of the release solvent composition in the release tank 4 has an influence on release performance and inflammability, and thus is controlled and adjusted using a thermometer (the release tank temperature sensor S1), a densitometer using a specific gravity balance or a refractometer (the release tank concentration sensor S3) or the like.

When the concentration change is sensed by the release tank concentration sensor S3 and the concentration of (a) the 1,1,2,2,3,3,4-heptafluorocyclopentane in the release solvent composition in the release tank 4 becomes lower than a predetermined concentration, a predetermined amount of the supply liquid containing the ingredient (a) as the main ingredient is supplied from the supply liquid tank 12 to the release tank 4. Thus, the concentration of the release solvent composition in the release tank 4 can be adjusted.

Further, when the liquid surface is descended to the position of the sensor A, the sensor A of the release tank liquid surface sensor S2 detects a descent of the liquid surface and supplies a predetermined amount of the release solvent composition from the release solvent composition tank 8 to the release tank 4. Further, when the liquid surface is ascended to the position of the sensor B, the sensor B of the release tank liquid surface sensor S2 detects an ascent of the liquid surface and stop supplying of the release solvent composition from the release solvent composition tank 8 to the release tank 4. Thus, the amount of the release solvent composition in the release tank 4 can be maintained within a predetermined range.

Further, it is preferable that, during immersion of the container storing the thermoplastic resin molded article in the release solvent composition in the release tank 4, the release solvent composition including the released coating film is fed into the filter 22 by the pump 24, and the coating film is removed from the release solvent composition using the filter 22. Thus, it is possible to prevent the coating film released in the release tank 4 from reattaching to the surface of the thermoplastic resin.

Further, the release solvent composition vaporized by heating by the heater 6, which is present in the vapor phase 16, is cooled by the release tank cooling coil 18, and refluxed into the release tank 4 after removal of the water content by the release tank water separator 20.

The releasing step is performed by immersing the container storing the thermoplastic resin molded article in the release solvent composition for a predetermined period and then the container is pulled up to the vapor phase 16 of the release tank so as to drain the liquid of the release solvent composition remaining in the container.

Note that, before immersion of the target to be released in the release solvent composition, the impurities, oil content, and resin-processing ingredient (e.g., a fluorinated resin) of the thermosetting resin coating film may be previously cleaned with a condensate obtained by condensing the vapor from the release solvent composition. Thus, the release step using the release device 2 can be effectively performed. Further, the temperature of the condensate is preferably higher from the viewpoint of improving the cleaning effect and it is preferably 60°C or more.

After performing the releasing step by the release device 2, the cleaning step is performed using the cleaning device 28 illustrated in FIG. 2. In the cleaning step, the target to be released after the releasing step is first rinsed. Specifically, the container storing the target to be released after the releasing step is immersed in a predetermined amount of the rinse tank liquid in the rinse tank 30, thereby removing the ingredient (b) and the ingredients (c), (d), and (e) to be used as needed remaining on the surface or in the vicinity of the target to be released and/or the coating film.

Here, the term "rinsed" in the first embodiment of the present invention means that the release solvent composition of the present invention is replaced with the solvent containing the ingredient (a) as the main ingredient.

The temperature of the rinse tank liquid in the rinse tank 30 is not particularly limited and it is preferably from 40°C to 70°C, taking into consideration rinsing performance and vapor-cleaning performance. As illustrated in FIG. 2, the rinse tank may be one tank or may be two or more tanks as needed.

After the rinsing step is finished, the target to be released and/or the coating film after removal of the ingredient (b) in the container is transferred to the vapor phase 38 of the cleaning device 28 and subjected to vapor cleaning. Here, the wording "vapor cleaning" used in the present invention means that the ingredient (b) as well as the ingredients (c), (d), and (e) to be used as needed slightly remaining on the surface of the thermosetting resin coating film and/or the thermoplastic resin molded article are removed using the vapor of the solvent containing the ingredient (a) as the main ingredient. Specifically, it means that, due to a temperature difference between the vapor of the solvent containing the ingredient (a) as the main ingredient to which the thermoplastic resin molded article is exposed and the thermoplastic resin molded article, the vapor of the solvent containing the ingredient (a) as the main ingredient forms a condensate on the surface of the thermoplastic resin molded article, thereby removing the ingredient (b) as well as the ingredients (c), (d), and (e) to be used as needed.

Further, the vapor of the solvent containing the ingredient (a) as the main ingredient, which is used in vapor cleaning, is obtained in the following manner. The rinse tank liquid in the rinse tank 30 is first fed into the vapor tank 32 through the overflow pipe 34. Next, the rinse tank liquid fed into the vapor tank 32 is heated by the heater 36 and used in vapor cleaning as the vapor of the solvent containing the ingredient (a) as the main ingredient.

Note that, the vapor of the solvent which contains the ingredient (a) present in the vapor phase 38 as the main ingredient is cooled by the cleaning device cooling coil 40 and converted to a liquid form. Thereafter, the water content is removed by the cleaning device water separator 42 and the resulting liquid is refluxed into the rinse tank 30. Further, when the ingredients (b), (c), (d), and (e) removed from the target to be released and/or the coating film are concentrated in the vapor tank 32 and the concentration of the resulting condensate reaches a predetermined concentration, the condensate may be reused to prepare the release solvent composition stored in the release solvent composition tank 8 or may be wasted.

When the surface temperature of the target to be released becomes the same as that of the vapor phase 38, the condensation of the vapor of the solvent containing the ingredient (a) as the main ingredient is stopped and the vapor cleaning is finished.

Then, the liquid of the solvent containing the ingredient (a) as the main ingredient which remains in the container is drained, the container is pulled up to the outside of the vapor phase interface 44 of the vapor tank 32, and dried.

Here, the term "dried" used in the first embodiment of the present invention means that the ingredients of the release solvent composition of the present invention, which are present on the surface of the thermoplastic resin molded article and/or the thermosetting resin coating film and present in the vicinity thereof, are vaporized at the temperature of the vapor phase 38 of the vapor tank 32. Further, the term "the surface and the vicinity thereof" includes the inside of the thermoplastic resin and the inside of the coating film.

The step of drying the solvent containing the ingredient (a) as the main ingredient is finished, thereby finishing the step of cleaning using the cleaning device 28.

Note that, the first embodiment is explained as a configuration in which the target to be released after the releasing step is immersed in the rinse tank liquid in the rinse tank 30, and a configuration in which the rinse tank liquid is sprayed into the target to be released after the releasing step in the rinse tank 30 may be used.

Further, the first embodiment is explained as a configuration in which the release tank 4 of the release device 2 illustrated in FIG. 1 is separated from the vapor tank 32 of the cleaning device 28 illustrated in FIG. 2, and it may be a configuration in which the release tank 4 is connected to the vapor tank 32 through the pipeline.

According to the release solvent composition and the release method according to the first embodiment of the present invention, a thermosetting resin coating film coated on a thermoplastic resin molded article can be efficiently released by a simple facility and a simple step.

### (Second Embodiment)

Subsequently, the cleaning solvent composition according to the second embodiment of the present invention will be explained. The cleaning solvent composition according to the second embodiment of the present invention contains (a) 1,1,2,2,3,3,4-heptafluorocyclopentane and (b) a first aromatic alcohol and has no flash point.

### (Cleaning Solvent Composition)

The cleaning solvent composition according to the second embodiment of the present invention is a cleaning solvent composition which contains at least (a) 1,1,2,2,3,3,4-heptafluorocyclopentane and (b) the first aromatic alcohol and has no flash point. Here, the wording "has no flash point" means that the cleaning solvent composition is recognized to have no flash point by a general evaluation test of flash point such as JIS K2265.

Further, the cleaning solvent composition according to the second embodiment of the present invention preferably contains, in addition to (a) 1,1,2,2,3,3,4-heptafluorocyclopentane (hereinafter sometimes referred to as "ingredient (a)") and (b) a first aromatic alcohol (hereinafter sometimes referred to as "ingredient (b)"), (e) an alcohol (hereinafter sometimes referred to as "ingredient (e)"), and/or (d) a phenolic antioxidant (hereinafter sometimes referred to as "ingredient (d)"). Further, it is preferable to contain (f) an ether having a structure in which a second aromatic alcohol is condensed with a third aromatic alcohol or an aliphatic alcohol. Note that, the cleaning solvent composition according to the second embodiment of the present invention does not contain the glycol ethers.
(a) The 1,1,2,2,3,3,4-heptafluorocyclopentane contained in the cleaning solvent composition according to the second embodiment of the present invention has no flash point. Further, (a) the 1,1,2,2,3,3,4-heptafluorocyclopentane is a non-chlorine fluorinated compound having low toxicity, a low ozone depleting potential, and a low warming potential.

Further, specific examples of (b) the first aromatic alcohol and second and third aromatic alcohol of (f) the ether having a structure in which a second aromatic alcohol is condensed with a third aromatic alcohol or an aliphatic alcohol, which are contained in the cleaning solvent composition according to the second embodiment of the present invention, include the same aromatic alcohol as those exemplified in the first embodiment. Among these, benzyl alcohol and phenethyl alcohol are preferred. Further, the first aromatic alcohol, the second aromatic alcohol, and the third aromatic alcohol may be the same as or different from one another.

Further, (e) the alcohol which can be used for the cleaning solvent composition according to the second embodiment of the present invention is preferably an alcohol which forms an azeotropic mixture with (a) 1,1,2,2,3,3,4-heptafluorocyclopentane and more preferably tert-amyl alcohol.

Further, specific examples of (d) the phenolic antioxidant include the same phenolic antioxidant as those exemplified in the first embodiment. Among these, 2,6-di-t-butyl-p-cresol (BHT) is preferred from the viewpoint of a high antioxidant effect.

Further, specific examples of (f) the ether having a structure in which a second aromatic alcohol is condensed with a third aromatic alcohol or an aliphatic alcohol include dibenzyl ether, ethylbenzyl ether, methylbenzyl ether, isopropylbenzyl ether, phenethyl benzyl ether, methyl phenethyl ether, and ethyl phenethyl ether. Among these, dibenzyl ether and methylbenzyl ether are preferred.

The weight ratio of each ingredient in the cleaning solvent composition according to the second embodiment of the present invention is not particularly limited as long as it is within the range that does not impair the cleaning performance and non-flammability. When the weight of (a) the 1,1,2,2,3,3,4-heptafluorocyclopentane is represented by A and the weight of (b) the first aromatic alcohol is represented by B, the weight ratio (A/B) of (a) the 1,1,2,2,3,3,4-heptafluorocyclopentane to (b) the first aromatic alcohol is preferably greater than 30/70 and less than 90/10. The weight ratio of (b) the first aromatic alcohol is within the above range, thereby reducing a phenomenon in which the cleaning performance cannot be sufficiently exerted due to the very low weight ratio of (b) the first aromatic alcohol and thereby also reducing a phenomenon in which it becomes difficult to obtain the cleaning solvent composition which has no flash point due to the very high weight ratio of (b) the first aromatic alcohol.

The addition amount when (d) the phenolic antioxidant is added is preferably from 1 to 1000 ppm and more preferably from 10 to 500 ppm based on the total amount of (a) the 1,1,2,2,3,3,4-heptafluorocyclopentane, (b) the first aromatic alcohol, and (e) the alcohol to be added as needed.

In the case of further adding (f) the ether having a structure in which a second aromatic alcohol is condensed with a third aromatic alcohol or an aliphatic alcohol, when the weight of (b) the first aromatic alcohol is represented by B and the weight of (f) the ether is represented by F, the weight ratio (B/F) of (b) the first aromatic alcohol to (f) the ether is preferably greater than 80/20 and less than 1/99. The weight ratio of (f) the ether is within the above range, thereby reducing a phenomenon in which the solubility of machining oil is reduced due to the very low weight ratio of (f) the ether and thus the cleaning performance is not ensured.

### (Cleaning Method)

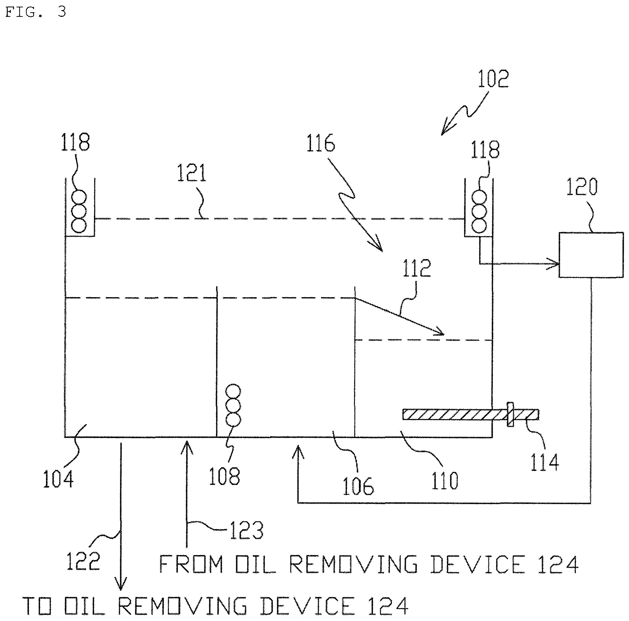

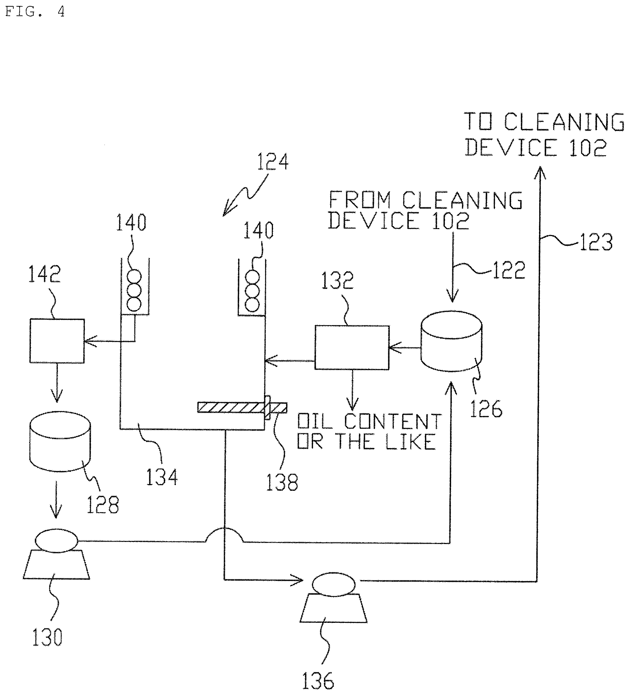

Hereinafter, the cleaning method using the cleaning solvent composition according to the second embodiment of the present invention will be explained with reference to FIGs. 3 and 4. FIG. 3 is a view illustrating an outline of a cleaning device used in the above cleaning method, and FIG. 4 is a view illustrating an outline of an oil removing device for removing an oil content from a liquid in a cleaning tank of the cleaning device. The cleaning method using the cleaning solvent composition of the present invention can perform the most effective cleaning step using the cleaning device illustrated in FIG. 3 and the oil removing device illustrated in FIG. 4; however, the cleaning device and the oil removing device which can be used in the above cleaning method are not limited to those illustrated in FIGs. 3 and 4, respectively.

As illustrated in FIG. 3, a cleaning device 102 includes a cleaning tank 104 into which the cleaning solvent composition is introduced and which rinses the target to be cleaned, a rinse tank 106 into which the rinse tank liquid is introduced and which rinses the cleaning solvent composition attached to the target to be cleaned after being cleaned in the cleaning tank 104, a rinse tank cooling coil 108 that cools the rinse tank liquid in the rinse 106 tank, a vapor tank 110 that performs vapor cleaning on the target to be cleaned after being rinsed with the rinse tank liquid in the rinse tank 106 using the vapor from the rinse tank liquid in in the vapor tank 110, an overflow pipe 112 that feeds the rinse tank liquid from the rinse tank 106 to the vapor tank 110, a heater 114 that heats the rinse tank liquid in the vapor tank 110, a vapor phase 116 that has the rinse tank liquid vaporized by heating by the heater 114, a vapor tank cooling coil 118 that cools the vaporized rinse tank liquid present in the vapor phase 116, and a vapor tank water separator 120 that removes the water content from the rinse tank liquid cooled by the vapor tank cooling coil 118.

Further, a vapor phase interface 121 of the vapor tank is present at the top part of the vapor phase 116 in FIG. 3. Further, the cleaning tank 104 includes a pipeline 122 that feeds the cleaning solvent composition whose oil content concentration becomes higher after being used in cleaning of the target to be cleaned into an oil removing device 124 (refer to FIG. 4) and a pipeline 123 that feeds the cleaning solvent composition after removal of the oil content by the oil removing device 124 into the cleaning tank 104.

Here, the rinse tank liquid is preferably a solvent containing the ingredient (a) as a main ingredient. Here, the solvent containing the ingredient (a) as the main ingredient may contain an alcohol which forms an azeotropic mixture with the ingredient (a) and (b) the aromatic alcohol contained in the cleaning solvent composition of the present invention, in addition to the ingredient (a), in the range that does not impair the rinsing performance and vapor-cleaning performance. In the case of containing ingredients other than the ingredient (a), it is preferable to form an azeotropic composition from the viewpoint of the possibility of predicting the flash point. Ingredients other than the ingredient (a) are contained in the rinse tank liquid and an azeotropic composition is formed, thereby reducing a phenomenon in which, during cleaning, the composition of the cleaning solvent composition is changed by the addition of an alcohol or another compound which does not form an azeotropic mixture with the ingredient (a) and the concentration of an inflammable compound such as the alcohol is increased, whereby the flash point appears. The alcohol which forms an azeotropic composition is, for example, tert-amyl alcohol. Note that, the solvent containing the ingredient (a) as the main ingredient is also used when the oil removing device 124 removes the oil content from the cleaning solvent composition used in cleaning in the cleaning tank 104, and is stored in, for example, a tank 128 (refer to FIG. 4).

Further, as illustrated in FIG. 4, the oil removing device 124 includes a mixing tank 126 that mixes the cleaning solvent composition fed from the cleaning tank 104 of the cleaning device 102 with the solvent containing the ingredient (a) as the main ingredient to form a mixture, a tank 128 that stores the solvent containing the ingredient (a) as the main ingredient, a pump 130 that feeds the solvent containing the ingredient (a) as the main ingredient from the tank 128 to the mixing tank 126, a separator 132 that separates the oil content and the impure content isolated due to insolubility in the cleaning solvent composition from the mixture mixed in the mixing tank 126, a concentration tank 134 that concentrates the cleaning solvent composition diluted with the solvent containing the ingredient (a) as the main ingredient (mixture), a pump 136 that feds the mixture concentrated in the concentration tank 134 (concentrated liquid) into the cleaning tank 104 of the cleaning device 102, a heater 138 that heats the mixture in the concentration tank 134, a concentration tank cooling coil 140 that cools the mixture vaporized by heating by the heater 138, and a concentration tank water separator 142 that removes the water content from the mixture cooled by the concentration tank cooling coil 140. Note that, the mixture after removal of the water content by the concentration tank water separator 142 is fed into the tank 128.

The cleaning method in case of cleaning using the cleaning device 102 illustrated in FIG. 3 will be explained. The above cleaning method includes: a cleaning step of cleaning the target to be cleaned in the cleaning tank 104 using the cleaning solvent composition of the present invention; a rinsing step of rinsing the cleaning solvent composition attached to the target to be cleaned in the rinse tank 106 after being cleaned in the cleaning step; a vapor cleaning step of vapor cleaning the target to be cleaned which has been rinsed in the rinsing step with vapor in the vapor phase 116; and a drying step of drying the target to be cleaned which has been subjected to vapor cleaning in the vapor cleaning step.

First, in the cleaning step, the target to be cleaned to which the machining oil is attached is stored in a fixture or basket for cleaning (hereinafter sometimes collectively referred to as "cleaning container"). Next, the target to be cleaned which has been attached to or stored in the cleaning container is immersed in the cleaning solvent composition in the cleaning tank 104 for a predetermined period. At this time, to the target to be cleaned, a mechanical force generated by ultrasonic waves, shaking or stirring of the cleaning solvent composition is applied.

Here, the machining oil is mixed into the cleaning solvent composition in the cleaning tank 104 due to cleaning of the target to be cleaned. In order to maintain a constant level of the cleaning performance of the cleaning solvent composition into which the machining oil has been mixed, it is necessary to keep the concentration of the oil content lower than the constant level. As the concentration of the oil content in the cleaning solvent composition in the cleaning tank 104 increases, the oil content tends to remain in the target to be cleaned when performing the rinsing step to be described later, thereby causing a poor cleaning result. Accordingly, during cleaning using the cleaning device illustrated in FIG. 3, it is necessary to constantly remove the oil content from the cleaning solvent composition in the cleaning tank 104 using the oil removing device illustrated in FIG. 4.

When the oil content is removed using the oil removing device 124 illustrated in FIG. 4, a constant amount of the cleaning solvent composition in the cleaning tank 104 (refer to FIG. 3) is extracted and fed into the mixing tank 126 through the pipeline 122. In the mixing tank 126, a mixture of the cleaning solvent composition and the solvent containing the ingredient (a) as the main ingredient which has been fed from the tank 128 is prepared.

The mixture mixed in the mixing tank 126 is fed into the separator 132 and the oil content is separated in the separator 132. In the separator 132, the solubility of the oil content is reduced by dilution of the ingredient (b) in the cleaning solvent composition with the solvent containing the ingredient (a) as the main ingredient which is mixed in the mixing tank 126, whereby the oil content is liberated. Here, examples of the oil content include water-soluble machining oils, oil-soluble machining oils, oils and fats added to the machining oils, and resins.

The method of separating the oil content in the separator 132 is not particularly limited, and any known method such as settled separation, separation using density difference or separation using filters may be used. Before separation of the oil content, filtration may be carried out using a filter for removing the solid content and precipitate which do not dissolve in the composition of the present invention.

The mixture after removal of the oil content is fed into the concentration tank 134 and concentrated in the concentration tank 134, followed by being fed into the cleaning tank 104 (refer to FIG. 3) of the cleaning device 102 through the pipeline 123. Note that, the mixture after removal of the oil content in the separator 132 is fed into the vapor tank 110 of the cleaning device 102 and may be concentrated in the vapor tank.

Then, after the completion of the cleaning step, the rinsing step is performed using the cleaning device illustrated in FIG. 3. In the rinsing step, the target to be cleaned after being cleaned with the cleaning solvent composition in the cleaning tank 104 is transferred into the rinse tank 106 and immersed in the rinse tank liquid in the rinse tank 106 for a predetermined period, whereby the cleaning solvent composition attached to the target to be cleaned is rinsed. Specifically, the cleaning container to which the target to be cleaned after being cleaned in the cleaning tank 104 is attached or in which the target to be cleaned after being cleaned in the cleaning tank 104 is stored is immersed in a predetermined amount of the rinse tank liquid in the rinse tank 106, thereby removing the ingredient (b) as well as the ingredients (e) and (d) to be used as needed remaining on the surface or in the vicinity of the target to be cleaned.

Here, the term "rinsed" in the second embodiment of the present invention means that the cleaning solvent composition of the present invention and/or the cleaning solvent composition of the present invention containing the oil content as the impure content is replaced with the solvent containing the ingredient (a) as the main ingredient.

The temperature of the rinse tank liquid in the rinse tank 106 is not particularly limited. Here, in order to enhance the vapor-cleaning performance, the rinse tank liquid is preferably maintained at a low temperature as much as possible. For example, the temperature of the rinse tank liquid is preferably 30°C or more lower than the temperature of the vapor of the vapor phase 116. Further, as illustrated in FIG. 3, the rinse tank 106 may be one tank or may be two or more tanks as needed.

Further, the vapor cleaning step is performed. In other words, after the rinsing step is finished, the target to be cleaned after removal of the ingredient (b) is transferred to the vapor phase 116 of the cleaning device 102 and subjected to vapor cleaning. Here, the wording "vapor cleaning" used in the present invention means that the cleaning solvent composition of the present invention which contains the ingredient (b) as well as the ingredients (e) and (d) to be used as needed and/or the oil content as the impurity content slightly remaining on the surface of the target to be cleaned is removed using the vapor of the solvent containing the ingredient (a) as the main ingredient. Specifically, it means that, due to a temperature difference between the vapor of the solvent containing the ingredient (a) as the main ingredient to which the target to be cleaned is exposed and the target to be cleaned, the vapor of the solvent containing the ingredient (a) as the main ingredient forms a condensate on the surface of the target to be cleaned, thereby removing the ingredient (b) as well as the ingredients (e) and (d) to be used as needed.

Further, the vapor of the solvent containing the ingredient (a) as the main ingredient, which is used in vapor cleaning, is obtained in the following manner. The rinse tank liquid in the rinse tank 106 is first fed into the vapor tank 110 through the overflow pipe 112. Next, the rinse tank liquid fed into the vapor tank 110 is heated by the heater 114 and used in vapor cleaning as the vapor of the solvent containing the ingredient (a) as the main ingredient.

Note that, the vapor of the solvent which contains the ingredient (a) as the main ingredient present in the vapor phase 116 is cooled by the vapor tank cooling coil 118 and converted to a liquid form. Thereafter, the water content is removed by the vapor tank water separator 120 and the resulting liquid is refluxed into the rinse tank 106. Note that, the ingredients (b), (e), and (d) removed from the target to be cleaned are concentrated in the vapor tank 110 and the resulting condensate may be reused to prepare the cleaning solvent composition or may be wasted.

When the surface temperature of the target to be cleaned becomes the same as that of the vapor phase 116, the condensation of the vapor of the solvent containing the ingredient (a) as the main ingredient is stopped and the vapor cleaning is finished.

Next, the drying step is performed. Specifically, the liquid of the solvent containing the ingredient (a) as the main ingredient which is attached to or remains in the cleaning container is drained, the container is pulled up to the outside of the vapor phase interface 121 of the vapor tank 110, and dried.

Here, the term "dried" used in the second embodiment of the present invention means that the ingredients of the cleaning solvent composition of the present invention, which are present on the surface of the target to be cleaned and present in the vicinity thereof, is vaporized at the temperature of the vapor phase 116 of the vapor tank 110. Further, the term "the surface and the vicinity thereof" includes the inside of the target to be cleaned.

When the drying of the solvent containing the ingredient (a) as the main ingredient is finished, the cleaning using the cleaning device 102 is finished.

Note that, the second embodiment is explained as a configuration in which the target to be cleaned after the cleaning step is immersed in the rinse tank liquid in the rinse tank 106, a configuration in which the rinse tank liquid is sprayed into the target to be cleaned after the cleaning step in the rinse tank 106 may be used or the vapor cleaning may be performed without passing through the rinse tank.

According to the cleaning solvent composition of the second embodiment of the present invention, it is possible to avoid inflammable problems and improve the cleaning performance of 1,1,2,2,3,3,4-heptafluorocyclopentane which is a non-chlorine fluorinated compound having low toxicity, a low ozone depleting potential, and a low warming potential. {Examples}

Hereinafter, the present invention will be more specifically explained based on Examples and Comparative examples; however, the present invention is not limited to the following Examples. Note that, Examples and Comparative Examples regarding the first embodiment of the present invention as well as Examples, Comparative Examples, and Reference Examples regarding the second embodiment of the present invention will be explained separately.

### (Examples and Comparative Examples Regarding First Embodiment)

The physical properties of each of the release solvent compositions according to the first embodiment were measured and evaluated in the following manner.

### (1) Flash Point

The flash point was measured by the Tag Closed Cup method and the Cleveland Open Cup method in accordance with JIS K2265 and the presence or absence of the flash point was shown in Tables 2 and 3.

### (2) Evaluation of Release Performance

Each thermoplastic resin molded article with a thermosetting resin coating film coated thereon shown in Table 1 was cut into a size of 1.5 cm in length × 1.5 cm in width to form a test piece. A round bottom flask equipped with a reflux cooling pipe having a volume of 50 ml into which 50 g of the release solvent composition had been introduced was immersed in an oil bath adjusted to 120°C. Then, the test piece was hung so that it was positioned in a gas phase portion between a cooling part cooled by the cooling pipe and the liquid level in the round bottom flask equipped with the reflux cooling pipe. 10 minutes later, the test piece in the gas phase portion was immersed in the release solvent for 20 minutes. Then, the test piece was taken out from the round bottom flask. The surface of the test piece was rubbed with the COMFORT service towel (manufactured by NIPPON PAPER CRECIA Co., LTD.) which had been folded with three folds, thereby removing the coating film remaining on the surface of the test piece. Then, the proportion of the area of the coating film remaining on the surface of the test piece (coating film remaining area) was measured. The evaluation was performed in accordance with the criteria below and the results were shown in Tables 2 and 3.
A: the coating film remaining area is 0%
B: the coating film remaining area exceeds 0% and 10% or less
C: the coating film remaining area exceeds 10% and 30% or less
D: the coating film remaining area exceeds 30%
E: the coating film is not released

### (3) Surface State after Releasing of Coating Film of Molded Article

The surface of each test piece after the release performance evaluation test was visually observed. The evaluation was performed in accordance with the criteria below and the results were shown in Tables 2 and 3.
A: the surface is smooth and glossy
B: the surface is non-glossy

### (Thermoplastic Resin Molded Article)

The kinds of the thermoplastic resin molded articles as the test pieces used in the Examples and the Comparative Examples are shown in Table 1.

**{Table 1}**

| Test piece | Vehicle type | Base material for molded product (thermoplastic resin) | Thermosetting resin coating film | Color of coating film |
|---|---|---|---|---|
| α | Toyota Crown | Polypropylene resin | First layer: urethane resin | Silver |
| | | | Second layer: urethane resin | |
| | | | Third layer: acryl urethane resin | |
| β | Toyota Spade (2012 model) | Polypropylene resin | NA | Silver |

| | | | | |
|---|---|---|---|---|
| * The results show the analysis of the resin coating materials from NISSAN ARC, LTD. | | | | |

### {Examples 1-1 to 1-5}

Respective ingredients were mixed with the composition described in Table 2, thereby obtaining release solvent compositions. The release performance evaluation of bumper test pieces α and β was performed using each of the release solvent compositions. Further, the flash point of each of the release solvent compositions was measured and the results were shown in Table 2. From this result, it is confirmed that the release solvent composition of the present invention which includes the ingredient (a) and the ingredient (b) has no flash point and the thermosetting resin coating film coated on the thermoplastic resin molded article can be reliably released without any problem. Here, the bath temperature is a temperature of the oil bath into which a round bottom flask is immersed. The release time indicates a time of being immersed in the release solvent composition in which the temperature of the release solvent reaches a constant level.

### {Examples 1-6 to 1-10}

Respective ingredients were mixed with the composition described in Tables 2 and 3, thereby obtaining release solvent compositions. The release performance evaluation of bumper test pieces α and β as well as the observation of the surface state after releasing were performed using each of the release solvent compositions. Note that, in Example 1-10, the release performance evaluation of only the bumper test piece β was performed.

Further, the flash point measurement was performed and the results were shown in Tables 2 and 3. From this result, it is confirmed that the release solvent composition of the present invention which includes the ingredient (a), the ingredient (b), and the ingredient (c) has no flash point, the thermosetting resin coating film coated on the thermoplastic resin molded article can be reliably released without any problem, and the surface state of the molded article after releasing is very good.

### (Example 1-11)

Respective ingredients were mixed with the composition described in Table 3, thereby obtaining a release solvent composition. The release performance evaluation was performed in the same manner as in Example 2 using the release solvent composition and the results were obtained. Further, the flash point measurement was performed and the results were shown in Table 3. From this result, it is confirmed that the release solvent composition of the present invention which includes the ingredient (a), the ingredient (b), and the ingredient (d) has no flash point, and the phenolic antioxidant has no adverse effect on the release performance.

### (Example 1-12: Evaluation of Release Performance and Evaluation of Rinsing and Vapor-Cleaning Performance by Actual Device)

Into the release tank 4 of the release device 2 illustrated in FIG. 1, 40 L of the release solvent composition obtained by mixing each ingredient according to the composition shown in Table 3 was introduced. Into the rinse tank 30 and the vapor tank 32 of the cleaning device 28 illustrated in FIG. 2, a cleaning agent containing the ingredient (a) as the main ingredient (ZEORORA H, manufactured by ZEON CORPORATION) was introduced.

Then, the release tank 4 was heated to a boiling state. The test piece α shown in Table 1 and the polypropylene resin (manufactured by Test Piece Corporation, length × width: 2 cm × 5 cm, thickness: 2 mm) were introduced into a cylindrical rotatable container (in which pores or meshes for introducing the release solvent composition into the container are formed). The container was rotated for 10 minutes while the condensate of the release solvent composition at 70°C was sprayed in the vapor phase 16 of the release device 2 and then immersed in the release solvent composition in the release tank 4 for 20 minutes.

Then, in the rinse tank 30 of the cleaning device 28 illustrated in FIG. 2, the test piece after being released by the release device 2 (refer to FIG. 1) was rinsed using ZEORORA H at 50°C. The test piece was transferred to the vapor phase 38 of the vapor tank 32 and subjected to vapor cleaning.

The liquid on the test piece was then removed in the vapor phase 38, and the test piece was transferred to the upper side of the vapor phase interface 44 and dried. Thereafter, the test piece was rubbed with the COMFORT service towel (manufactured by NIPPON PAPER CRECIA Co., LTD.) which had been folded with three folds, thereby removing the coating film attached to the surface of the test piece α. The surface was observed and the area of the coating film remaining on the surface of the test piece was measured.

The release performance evaluation test of the test piece α was performed in the same manner as in Example 1-1. From this result, it is confirmed that the releasing step is reliably performed by the release method of the present invention.

Further, the dry state of the surface of the test piece α after being dried was observed. As a result, the release solvent composition did not remain on the surface of the resin molded article after the release step and the surface was dry. The result is shown in Table 3 below as "A: no remaining release solvent composition on the surface of the test piece α".

Note that, the test piece α is required to satisfy the condition that only the thermosetting resin coating film swells in the release solvent composition and the thermoplastic resin molded article itself does not swell in the release solvent composition. In order to evaluate the swelling performance in the release solvent composition of the thermoplastic resin molded article itself, the releasing step, the cleaning step, and the drying step were performed on the polypropylene resin by the actual device. The weight of the polypropylene resin test piece was measured before performing the releasing step and after performing the drying step. As a result, an increase in the weight of the polypropylene resin test piece was 1 wt% or less. This showed that the test piece exhibited low swelling performance in the release solvent composition.

### {Comparative Examples 1-1 to 1-2}

Respective ingredients were mixed with the composition described in Table 3, thereby obtaining release solvent compositions. The release performance evaluation and the flash point measurement were performed in the same manner as in Example 1-1. This result shows that the release solvent composition exhibits a satisfactory release performance but has a flash point, whereby the object of the present invention cannot be achieved.

### {Comparative Examples 1-3 to 1-4}

Respective ingredients were mixed with the composition described in Table 3, thereby obtaining release solvent compositions. The release performance evaluation was performed in the same manner as in Example 1-1. Note that, the release performance evaluation of only the bumper test piece α was performed. This result shows that the release solvent composition without containing aromatic alcohol does not exhibit a satisfactory release performance.

### {Comparative Examples 1-5 to 1-6}

The release performance was evaluated in the same manner as in Example 1-3 except that HFC365mfc or HFE-7200 was added in place of (a) the 1,1,2,2,3,3,4-heptafluorocyclopentane. Note that, the release performance evaluation of only the bumper test piece α was performed. This result shows that the release performance is inferior when HFC365mfc and HFE-7200 are added.

### {Comparative Example 1-7}

The flash point measurement was performed in the same manner as in Example 1-1 except that the release solvent composition consisting of only (a) the 1,1,2,2,3,3,4-heptafluorocyclopentane was used, and the release performance was evaluated in the same manner as in Comparative Examples 1-5 and 1-6. Note that, the immersing time for release performance evaluation was set to 30 minutes. As a result, it is found that the release solvent composition produced by using (a) the 1,1,2,2,3,3,4-heptafluorocyclopentane singly is not practical because the release performance of the thermosetting resin coating film is inferior.

**{Table 2}**

| | | Example | | | | | | | | |
|---|---|---|---|---|---|---|---|---|---|---|
| Ingredient (parts by weight) | | 1-1 | 1-2 | 1-3 | 1-4 | 1-5 | 1-6 | 1-7 | 1-8 | 1-9 |
| Ingredient (a) | 1,1,2,2,3,3,4-heptafluorocyclopentane (product name: ZEORORA H, manufactured by ZEON CORPORATION) | 30 | 40 | 50 | 40 | 50 | 50 | 50 | 50 | 50 |
| Ingredient (b) | Benzyl alcohol | 70 | 60 | 50 | - | - | 40 | 25 | 10 | 10 |
| | Phenethyl alcohol | - | - | - | 60 | 50 | - | - | - | - |
| Ingredient (c) | γ-butyrolactone | - | - | - | - | - | 10 | 25 | 40 | - |
| | 3-methoxy-3-methylbutanol | - | - | - | - | - | - | - | - | 40 |
| | 3-methoxy-3-methylbutyl acetate | - | - | - | - | - | - | - | - | - |
| Ingredient (d) | 2,6-di-t-butyl-p-cresol | - | - | - | - | - | - | - | - | - |
| Release conditions | Bath temperature (°C) | 120 | 120 | 120 | 120 | 120 | 120 | 120 | 120 | 120 |
| | Time (min) | 20 | 20 | 20 | 20 | 20 | 20 | 20 | 20 | 20 |
| Evaluation of release performance | Bumper test piece α | A | A | B | A | A | A | A | A | B |
| | Bumper test piece β | A | A | A | A | A | A | A | A | A |
| Surface state of test piece α after being released | | A | A | B | B | B | A | A | A | A |
| Flash point | | Absent | Absent | Absent | Absent | Absent | Absent | Absent | Absent | Absent |

**{Table 3}**

| | | Example | | | Comparative example | | | | | | |
|---|---|---|---|---|---|---|---|---|---|---|---|
| Ingredient (parts by weight) | | 1-10 | 1-11 | 1-12 | 1-1 | 1-2 | 1-3 | 1-4 | 1-5 | 1-6 | 1-7 |
| Ingredient (a) | 1,1,2,2,3,3,4-heptafluorocyclopentane (product name: ZEORORA H, manufactured by ZEON CORPORATION) | 50 | 40 | 50 | 20 | 50 | 50 | 50 | - | - | 100 |
| Ingredient (b) | Benzyl alcohol | 10 | 60 | 50 | 80 | - | - | - | 50 | 50 | - |
| | Phenethyl alcohol | - | - | - | - | - | - | - | - | - | - |
| Ingredient (c) | γ-butyrolactone | - | - | - | - | 50 | - | - | - | - | - |
| | 3-methoxy-3-methylbutanol | - | - | - | - | - | 50 | - | - | - | - |
| | 3-methoxy-3-methylbutyl acetate | 40 | - | - | - | - | - | 50 | - | - | - |
| Ingredient (d) | 2,6-di-t-butyl-p-cresol | - | 100 (ppm) | - | - | - | - | - | - | - | - |
| 1,1,1,3,3-pentafluoro butane (HFC365mfc) | | - | - | - | - | - | - | - | 50 | - | - |
| Mixture of ethyl nonafluorobutyl ether and ethyl nonafluoroisobutyl ether (product name: HFE-7200, manufactured by Sumitomo 3M Limited) | | - | - | - | - | - | - | - | - | 50 | - |
| Release conditions | Bath temperature (°C) | 120 | 120 | - | 120 | 120 | 120 | 120 | 120 | 120 | 120 |
| | Time (min) | 20 | 20 | 20 | 20 | 20 | 20 | 20 | 20 | 20 | 30 |
| | Released liquid temperature | - | - | Boiled | - | - | - | - | - | - | - |
| Evaluation of release performance | Bumper test piece α | - | A | A | A | A | D | D | E | E | E |
| | Bumper test piece β | A | A | - | A | A | - | - | - | - | - |
| Surface state of test piece α after being released | | - | - | A | A | - | - | - | - | - | - |
| Surface state of test piece β after being dried | | - | - | A | - | - | - | - | - | - | - |
| Flash point | | Absent | Absent | Absent | Present | Present | - | - | - | - | Absent |

### (Examples, Comparative Examples, and Reference Examples Regarding Second Embodiment)

Subsequently, the physical properties of each of the cleaning solvent compositions according to the second embodiment were measured and evaluated in the following manner.

### (1) Flash Point

The flash point was measured by the Tag Closed Cup method and the Cleveland Open Cup method in accordance with JIS K2265 and the presence or absence of the flash point was shown in Table 6.

### (2) Solubility

The amount of oil content (g) soluble in 10 g of the cleaning solvent composition mixed with the composition shown in Table 5 was measured. Note that, NS Clean 200 (Class III petroleums, manufactured by JX Nippon Oil & Energy Corporation) was used as the oil content in the test.

### (3) Evaluation of Cleaning Performance

The target to be cleaned with various machining oils described in Table 4 attached thereto was rinsed with the cleaning solvent composition mixed with the composition shown in Table 6. Thereafter, the oil content remaining on the target to be cleaned was extracted with a mixture of HCFC-225 (Asahiklin AK-225, manufactured by Asahi Glass Co., Ltd.) and tetrachloroethylene (weight ratio; 3/7) and measured by an oil content measurement device (manufactured by HORIBA, Ltd.). The results measured by the oil content measurement device were divided into the case of the oil-soluble machining oil and the case of the water-soluble machining oil and the amount of the residual oil was evaluated in accordance with the criteria below. The results are shown in Table 6.
(i) Oil-soluble machining oil
   A: less than 30 µg
   B: 30 µg or more and less than 40 µg
   C: 40 µg or more and less than 100 µg
   D: 100 µg or more
(ii) Water-soluble machining oil
   A: less than 20 µg
   B: 20 µg or more

Note that, the water-soluble machining oil as the machining oil was 10-fold diluted with tap water and subjected to the test. Further, as the target to be cleaned, a commercially available drill screw (chrome plating, Sara type, size: 5 × 35, average weight: 3 g/piece) was used.

**{Table 4}**

| Product name | Manufacturer | Solubility | Density | Kinematic viscosity |
|---|---|---|---|---|
| | | | (g/cm³ ) (15°C) | (mm²/s) (40°C) |
| Reliacut DS-5 | JX Nippon Oil & Energy Corporation | Oil solubility | 0.84 | 4.8 |
| Reliacut DS-10 | | | 0.86 | 11.8 |
| Reliacut DS-30 | | | 0.87 | 28.3 |
| CUT ABAS BM305 | Yushiro Chemical Industry Co., Ltd. | | 0.89 | 12 |
| YUSHIROKEN FGS700 | | Water solubility | 0.99 (Raw liquid) | - |

### {Examples 2-1 to 2-5 and Comparative Examples 2-1 to 2-2}

Respective ingredients were mixed with the composition described in Table 5, thereby obtaining cleaning solvent compositions of the present invention. The amount of each of the cleaning solvent compositions dissolved in NS Clean 200 (manufactured by JX Nippon Oil & Energy Corporation) at 25°C was measured and the results were compiled in Table 5. As for the measurement of the amount to be dissolved, 10 g of the cleaning solvent composition was added to NS Clean 200 and the amount to be dissolved was examined. When the composition does not dissolve, NS Clean 200 begins to liberate. This result shows that the cleaning solvent composition of the present invention containing the ingredient (a) and the ingredient (b) enhances the solubility of NS Clean 200 which is a hydrocarbon solvent. Further, it shows that the solubility of the cleaning solvent composition of the present invention is significantly superior to the solubility of each solvent in itself.

**{Table 5}**

| | | Example | | | | | Comparative example | |
|---|---|---|---|---|---|---|---|---|
| | | 2-1 | 2-2 | 2-3 | 2-4 | 2-5 | 2-1 | 2-2 |
| Ingredient (wt.%) | 1,1,2,2,3,3,4-heptafluorocyclopentane (product name: ZEORORA H, manufactured by ZEON CORPORATION) | 90 | 50 | 67.1 | 47.9 | 38.3 | 95.8 | - |
| | Benzyl alcohol | 10 | - | 30 | 50 | 60 | - | 100 |
| | Phenethyl alcohol | - | 50 | - | - | - | - | - |
| | tert-amyl alcohol | - | - | 2.9 | 2.1 | 1.7 | 4.2 | - |
| Amount dissolved in NS Clean 200 (g) | | 0.8 | 10 | 6 | 10 | 10 | 0.3 | 0.8 |

### {Examples 2-6 to 2-11 and Comparative Example 2-3}

Respective ingredients were prepared so as to have the composition shown in Table 6, thereby obtaining cleaning solvent compositions. The cleaning performance of each of the cleaning solvent compositions was measured and evaluated by the following method.

10 drill screws (3 g/piece), i.e., targets to be cleaned, were immersed in the machining oil for 10 minutes and the head of each of the drill screws was hung down for 30 minutes to remove the oil, followed by the cleaning test.

In the cleaning test, each step similar to that described for the cleaning device 102 illustrated in FIG. 3 was performed in the lab by the following method.

As the method corresponding to the cleaning step in the cleaning tank 104, 300 ml of the cleaning solvent composition was introduced into a 500-ml glass beaker and water was further introduced thereinto, which was place in an ultrasonic cleaning tank whose temperature had been controlled (300 W, 37 kHz, manufactured by SHARP CORPORATION). Then, the 10 drill screws, i.e., targets to be cleaned, were immersed in the cleaning solvent composition in the glass beaker and cleaned while applying ultrasonic vibration (US) under the conditions of predetermined time and predetermined temperature described in Table 6.

As the method corresponding to the rinsing step in the rinse tank 106, 300 ml of the solvent containing the ingredient (a) as the main ingredient was introduced into a 500-ml glass beaker, and then the drill screws after the cleaning step were immersed in the solvent and rinsed under the conditions of predetermined time and predetermined temperature described in Table 6.

As the method corresponding to the vapor cleaning step in the vapor tank 110, the solvent containing the ingredient (a) as the main ingredient was introduced into a 1 L-glass beaker equipped with a cooling coil and the solvent in the beaker was heated and boiled in an oil bath. Then, the drill screws after the rinsing step were subjected to vapor cleaning using vapor for a predetermined period.

After the completion of the vapor cleaning, the drill screws were allowed to stand in a room at an ordinary temperature for 10 minutes, thereby vaporizing and drying the cleaning solvent composition.

Finally, the drill screws after the drying step were immersed in an extract, the residual oil content was extracted in the ultrasonic cleaning tank at 40°C for 40 minutes, and the amount of the residual oil was measured.

As a result, the cleaning solvent composition of the present invention exhibited excellent cleaning performance on various machining oils.

### {Reference Example 1}

The cleaning performance was evaluated in the same manner as in Example 2-6 except that HCFC-225 (Asahiklin AK-225, manufactured by Asahi Glass Co., Ltd.) was used as the cleaning solvent and the cleaning conditions described in Table 6 were employed. The results are shown in Table 6.

**{Table 6}**

| | | | | Example | | | | | | Comparative Example | Reference Example |
|---|---|---|---|---|---|---|---|---|---|---|---|
| | | | | 2-6 | 2-7 | 2-8 | 2-9 | 2-10 | 2-11 | 2-3 | 1 |
| Ingredient (wt%) | 1,1,2,2,3,3,4-heptafluorocyclopentane (product name: ZEORORA H, manufactured by ZEON CORPORATION) | | | 90 | 67.1 | 47.9 | 38.3 | 50 | 28.7 | 95.8 | - |
| | Benzyl alcohol | | | 10 | 30 | 50 | 60 | - | 70 | - | - |
| | Phenethyl alcohol | | | - | - | - | - | 50 | - | - | - |
| | tert-amyl alcohol | | | - | 2.9 | 2.1 | 1.7 | - | 1.3 | 4.2 | - |
| | BHT (ppm) | | | - | - | 100 | - | - | - | - | - |
| HCFC-225 (product name: Asahiklin AK-225, manufactured by Asahi Glass Co., Ltd.) | | | | - | - | - | - | - | - | - | 100 |
| Cleaning conditions | Cleaning (US) | | Temperature (°C) | 50 | 50 | 50 | 50 | 50 | 50 | 50 | 40 |
| | | | Time (min) | 2 | 2 | 2 | 2 | 2 | 2 | 2 | 2 |
| | Rinsing (US) | | Temperature (°C) | 50 | 50 | 50 | 50 | 50 | 50 | 50 | 40 |
| | | | Time (min) | 2 | 2 | 2 | 2 | 2 | 2 | 2 | 2 |
| | Vapor cleaning | | Time (min) | 2 | 2 | 2 | 2 | 2 | 2 | 2 | 2 |
| Flash point | | | | Absent | Absent | Absent | Absent | Absent | Absent | Absent | Absent |
| Cleaning performance | | Reliacut DS-5 | | B | A | A | A | A | A | C | A |
| | | Reliacut DS-10 | | B | B | A | A | A | A | C | A |
| | | Reliacut DS-30 | | B | B | A | A | A | A | D | C |
| | | CUT ABAS BM305 | | A | A | A | A | A | A | C | A |
| | | YUSHIROKEN FGS700 | | A | A | A | A | A | A | B | B |

### {Reference Examples 2 to 5}

The flash point of each composition obtained by adding a glycol ether or γ-butyrolactone to the ingredient (a) was measured. The measurement results are shown in Table 7. The cleaning solvent composition of the present invention contains no glycol ether, but the ingredient (b) of the present invention is capable of controlling the flash point. Accordingly, even when the glycol ether was used as shown in Reference Example 5, the composition having no flash point could be produced.

**{Table 7}**

| | | Reference Example | | | |
|---|---|---|---|---|---|
| | | 2 | 3 | 4 | 5 |
| Ingredient (wt%) | 1,1,2,2,3,3,4-heptafluorocyclopentane (product name: ZEORORA H, manufactured by ZEON CORPORATION) | 55 | 55 | 50 | 49 |
| | Benzyl alcohol | - | - | - | 10 |
| | 3-methyl-3-methoxybutanol | 45 | - | - | 41 |
| | 3-methyl-3-methoxybutyl acetate | - | 45 | - | - |
| | γ-butyrolactone | - | - | 50 | - |
| Flash point | | Present | Present | Present | Absent |

### {Examples 2-9 and 2-12 to 2-16 and Comparative Example 2-3}

Respective ingredients were prepared so as to have the composition shown in Table 8, thereby obtaining cleaning solvent compositions.

Subsequently, the physical properties of each of the cleaning solvent compositions were measured and evaluated in the following manner.

### (1) Flash Point

The flash point was measured by the Tag Closed Cup method and the Cleveland Open Cup method in accordance with JIS K2265 and the presence or absence of the flash point was shown in Table 8.

### (2) Solubility

A predetermined amount of the machining oil (Reliacut DS-10) was added with the composition described in Table 8 and the solution state of the machining oil at 25°C was observed. With regards to benzyl alcohol of the ingredient (b) and dibenzyl ether and methylbenzyl ether of the ingredient (f), the amount of the ingredients (b) and (f) was reduced in an amount corresponding to the addition of the machining oil. With regards to ZEORORA HTA and tert-amyl alcohol, the concentration was maintained at the same level as that before addition. The solubility was evaluated in accordance with the criteria below. The results are shown in Table 8.
A: 10 wt% or more of machining oil was dissolved
B: 5 wt% or more and less than 10 wt% of machining oil caused separation of the machining oil
C: less than 5 wt% of machining oil caused separation of the machining oil

### (3) Evaluation of Cleaning Performance

The target to be cleaned with the machining oil (Reliacut DS-10) attached thereto was cleaned with the cleaning solvent composition mixed with the composition described in Table 8 by the same method as that of the second embodiment. As for the results measured by the oil content measurement device, the amount of the residual oil was evaluated in accordance with the criteria below. The results are shown in Table 8.
S: less than 15 µg
A: 15 µg or more and less than 30 µg
B: 30 µg or more and less than 40 µg
C: 40 µg or more and less than 100 µg

**{Table 8}**

| | | Example | | | | | | Comparative example |
|---|---|---|---|---|---|---|---|---|
| | | 2-9 | 2-12 | 2-13 | 2-14 | 2-15 | 2-16 | 2-3 |
| Ingredient (wt%) | 1,1,2,2,3,3,4-heptafluorocyclopentane (product name: ZEORORA HTA, manufactured by ZEON CORPORATION) | 38.3 | 28.7 | 38.3 | 38.3 | 38.3 | 28.7 | 95.8 |
| | Benzyl alcohol | 60 | 5 | 10 | 30 | 48 | 1 | - |
| | Dibenzyl ether | - | 65 | - | 30 | 12 | 69 | - |
| | Methylbenzyl ether | - | - | 50 | 0 | - | - | - |
| | tert-amyl alcohol | 1.7 | 1.3 | 1.7 | 1.7 | 1.7 | 1.3 | 4.2 |
| Machining oil dissolving performance | | B | A | A | A | A | A | C |
| Flash point | | Absent | Absent | Absent | Absent | Absent | Absent | Absent |
| Cleaning performance: Reliacut DS-10 | | A | S | S | S | S | S | C |

As a result, the machining oil dissolving performance of the cleaning solvent composition of the present invention was further improved by adding an ether.

## Claims

1. A release solvent composition for releasing a thermosetting resin coating film coated on a thermoplastic resin molded article, the release solvent composition comprising:
1,1,2,2,3,3,4-heptafluorocyclopentane and an aromatic alcohol, wherein the release solvent composition has no flash point.

2. The release solvent composition according to claim 1, wherein when a weight of the 1,1,2,2,3,3,4-heptafluorocyclopentane is represented by A and a weight of the aromatic alcohol is represented by B, a weight ratio (A/B) of the 1,1,2,2,3,3,4-heptafluorocyclopentane to the aromatic alcohol is greater than 30/70 and less than 70/30.

3. The release solvent composition according to claim 1 or 2, wherein the aromatic alcohol includes at least one of benzyl alcohol and phenethyl alcohol.

4. The release solvent composition according to any one of claims 1 to 3, further comprising an alcohol which forms an azeotropic mixture with 1,1,2,2,3,3,4-heptafluorocyclopentane.

5. The release solvent composition according to claim 4, wherein the alcohol is tert-amyl alcohol.

6. The release solvent composition according to any one of claims 1 to 5, further comprising at least one selected from a glycol ether, a glycol ether acetate and γ-butyrolactone.

7. The release solvent composition according to claim 6, wherein when a weight of the aromatic alcohol is represented by B and a weight of at least one selected from the glycol ether, the glycol ether acetate and the γ-butyrolactone is represented by C, a weight ratio (C/B) of at least one selected from the glycol ether, the glycol ether acetate and the γ-butyrolactone to the aromatic alcohol is greater than 20/80 and less than 80/20.

8. The release solvent composition according to claim 6 or 7, wherein at least one selected from the glycol ether, the glycol ether acetate and the γ-butyrolactone is at least one of 3-methoxy-3-methylbutanol and 3-methoxy-3-methylbutyl acetate.

9. The release solvent composition according to any one of claims 1 to 8, further comprising a phenolic antioxidant.

10. A release method comprising:
an immersing step of immersing the thermoplastic resin molded article on which the thermosetting resin coating film is coated in the release solvent composition according to any one of claims 1 to 9 and releasing the thermosetting resin coating film;
a cleaning step of rinsing and vapor cleaning the release solvent composition remaining on the thermoplastic resin molded article and/or the thermosetting resin coating film after the immersing step with a solvent that contains 1,1,2,2,3,3,4-heptafluorocyclopentane as a main ingredient; and
a drying step of drying the thermoplastic resin molded article and/or the thermosetting resin coating film after the cleaning step.

11. A cleaning solvent composition comprising: 1,1,2,2,3,3,4-heptafluorocyclopentane and a first aromatic alcohol, wherein the cleaning solvent composition has no flash point.

12. The cleaning solvent composition according to claim 11, wherein when a weight of the 1,1,2,2,3,3,4-heptafluorocyclopentane is represented by A and a weight of the first aromatic alcohol is represented by B, a weight ratio (A/B) of the 1,1,2,2,3,3,4-heptafluorocyclopentane to the first aromatic alcohol is greater than 30/70 and less than 90/10.

13. The cleaning solvent composition according to claim 11 or 12, wherein the first aromatic alcohol includes at least one of benzyl alcohol and phenethyl alcohol.

14. The cleaning solvent composition according to any one of claims 11 to 13, further comprising an alcohol which forms an azeotropic mixture with 1,1,2,2,3,3,4-heptafluorocyclopentane.

15. The cleaning solvent composition according to claim 14, wherein the alcohol is tert-amyl alcohol.

16. The cleaning solvent composition according to any one of claims 11 to 15, further comprising a phenolic antioxidant.

17. The cleaning solvent composition according to any one of claims 11 to 16, further comprising an ether having a structure in which a second aromatic alcohol is condensed with a third aromatic alcohol or an aliphatic alcohol.

18. The cleaning solvent composition according to claim 17, wherein when a weight of the first aromatic alcohol is represented by B and a weight of the ether is represented by F, a weight ratio (B/F) of the first aromatic alcohol to the ether is greater than 80/20 and less than 1/99.

19. The cleaning solvent composition according to claim 17 or 18, wherein the ether includes at least one of dibenzyl ether and methylbenzyl ether.

## Patentansprüche

1. Freisetzungslösungsmittelzusammensetzung zum Freisetzen eines wärmehärtenden Harzbeschichtungsfilms, der auf einen thermoplastischen Harz-Formgegenstand aufgetragen ist, wobei die Freisetzungslösungsmittelzusammensetzung umfasst:
1,1,2,2,3,3,4-Heptafluorcyclopentan und einen aromatischen Alkohol, wobei die Freisetzungslösungsmittelzusammensetzung keinen Entzündungspunkt hat.

2. Freisetzungslösungsmittelzusammensetzung gemäß Anspruch 1, wobei, wenn das Gewicht des 1,1,2,2,3,3,4-Heptafluorcyclopentan durch A dargestellt wird und das Gewicht des aromatischen Alkohols durch B dargestellt wird, das Gewichtsverhältnis (A/B) des 1,1,2,2,3,3,4-Heptafluorcyclopentan zu dem aromatischen Alkohol größer als 30/70 und kleiner als 70/30 ist.

3. Freisetzungslösungsmittelzusammensetzung gemäß Anspruch 1 oder 2, wobei der aromatische Alkohol wenigstens einen von Benzylalkohol und Phenethylalkohol umfasst.

4. Freisetzungslösungsmittelzusammensetzung gemäß einem der Ansprüche 1 bis 3, die außerdem einen Alkohol umfasst, der mit 1,1,2,2,3,3,4-Heptafluorcyclopentan ein azeotropes Gemisch bildet.

5. Freisetzungslösungsmittelzusammensetzung gemäß Anspruch 4, wobei der Alkohol tert-Amylalkohol ist.

6. Freisetzungslösungsmittelzusammensetzung gemäß einem der Ansprüche 1 bis 5, die außerdem wenigstens eins, ausgewählt aus einem Glycolether, einem Glycoletheracetat und γ-Butyrolacton, umfasst.

7. Freisetzungslösungsmittelzusammensetzung gemäß Anspruch 6, wobei, wenn das Gewicht des aromatischen Alkohols durch B dargestellt wird und das Gewicht des wenigstens einen, ausgewählt aus dem Glycolether, dem Glycoletheracetat und dem γ-Butyrolacton, durch C dargestellt wird, das Gewichtsverhältnis (C/B) des wenigstens einen, ausgewählt aus dem Glycolether, dem Glycoletheracetat und dem γ-Butyrolacton, zu dem aromatischen Alkohol größer als 20/80 und kleiner als 80/20 ist.

8. Freisetzungslösungsmittelzusammensetzung gemäß Anspruch 6 oder 7, wobei wenigstens eins, ausgewählt aus dem Glycolether, dem Glycoletheracetat und dem γ-Butyrolacton, wenigstens eins von 3-Methoxy-3-methylbutanol und 3-Methoxy-3-methylbutyl-acetat ist.

9. Freisetzungslösungsmittelzusammensetzung gemäß einem der Ansprüche 1 bis 8, die außerdem ein phenolisches Antioxidans umfasst.

10. Freisetzungsverfahren, umfassend:
einen Eintauchschritt des Eintauchens des thermoplastischen Harz-Formgegenstandes, auf welchen der wärmehärtende Harzbeschichtungsfilm aufgetragen ist, in die Freisetzungslösungsmittelzusammensetzung gemäß einem der Ansprüche 1 bis 9 und des Freisetzens des wärmehärtenden Harzbeschichtungsfilms;
einen Reinigungsschritt des Abspülens und Dampfreinigens der Freisetzungslösungsmittelzusammensetzung, die auf dem thermoplastischen Harz-Formgegenstand zurückgeblieben ist, und/oder des wärmehärtenden Harzbeschichtungsfilms nach dem Eintauchschritt mit einem Lösungsmittel, das 1,1,2,2,3,3,4-Heptafluorcyclopentan als Hauptingrediens enthält, und
einen Trocknungsschritt des Trocknens des thermoplastischen Harzformgegenstandes und/oder des wärmehärtenden Harzbeschichtungsfilms nach dem Reinigungsschritt.

11. Reinigungslösungsmittelzusammensetzung, umfassend 1,1,2,2,3,3,4-Heptafluorcyclopentan und einen ersten aromatischen Alkohol, wobei die Reinigungslösungsmittelzusammensetzung keinen Entzündungspunkt hat.

12. Reinigungslösungsmittelzusammensetzung gemäß Anspruch 1, wobei, wenn das Gewicht des 1,1,2,2,3,3,4-Heptafluorcyclopentan durch A dargestellt wird und das Gewicht des ersten aromatischen Alkohols durch B dargestellt wird, das Gewichtsverhältnis (A/B) des 1,1,2,2,3,3,4-Heptafluorcyclopentan zu dem ersten aromatischen Alkohol größer als 30/70 und kleiner als 90/10 ist.

13. Reinigungslösungsmittelzusammensetzung gemäß Anspruch 11 oder 12, wobei der erste aromatische Alkohol wenigstens einen von Benzylalkohol und Phenethylalkohol umfasst.

14. Reinigungslösungsmittelzusammensetzung gemäß einem der Ansprüche 11 bis 13, die außerdem einen Alkohol umfasst, der mit 1,1,2,2,3,3,4-Heptafluorcyclopentan ein azeotropes Gemisch bildet.

15. Reinigungslösungsmittelzusammensetzung gemäß Anspruch 14, wobei der Alkohol tert-Amylalkohol ist.

16. Reinigungslösungsmittelzusammensetzung gemäß einem der Ansprüche 11 bis 15, die außerdem ein phenolisches Antioxidans umfasst.

17. Reinigungslösungsmittelzusammensetzung gemäß einem der Ansprüche 11 bis 16, die außerdem einen Ether umfasst, der eine Struktur aufweist, in der ein zweiter aromatischer Alkohol mit einem dritten aromatischen Alkohol oder einem aliphatischen Alkohol kondensiert ist.

18. Reinigungslösungsmittelzusammensetzung gemäß Anspruch 17, wobei, wenn das Gewicht des ersten aromatischen Alkohols durch B dargestellt wird und das Gewicht des Ethers durch F dargestellt wird, das Gewichtsverhältnis (B/F) des ersten aromatischen Alkohols zu dem Ether größer als 80/20 und kleiner als 1/99 ist.

19. Reinigungslösungsmittelzusammensetzung gemäß Anspruch 17 oder 18, wobei der Ether wenigstens einen von Dibenzylether und Methylbenzylether umfasst.

## Revendications

1. Composition de solvant de libération pour libérer un film de revêtement de résine thermodurcissable appliqué en revêtement sur un article moulé en résine thermoplastique, la composition de solvant de libération comprenant :
du 1,1,2,2,3,3,4-heptafluorocyclopentane et un alcool aromatique, dans laquelle la composition de solvant de libération n'a pas de point d'éclair.

2. Composition de solvant de libération selon la revendication 1, dans laquelle lorsqu'un poids du 1,1,2,2,3,3,4-heptafluorocyclopentane est représenté par A et un poids de l'alcool aromatique est représenté par B, un rapport pondéral (A/B) du 1,1,2,2,3,3,4-heptafluorocyclopentane sur l'alcool aromatique est supérieur à 30/70 et inférieur à 70/30.

3. Composition de solvant de libération selon la revendication 1 ou 2, dans laquelle l'alcool aromatique inclut au moins l'un de l'alcool benzylique et de l'alcool phénéthylique.

4. Composition de solvant de libération selon l'une quelconque des revendications 1 à 3, comprenant en outre un alcool qui forme un mélange azéotropique avec le 1,1,2,2,3,3,4-heptafluorocyclopentane.

5. Composition de solvant de libération selon la revendication 4, dans laquelle l'alcool est l'alcool tert-amylique.

6. Composition de solvant de libération selon l'une quelconque des revendications 1 à 5, comprenant en outre au moins un sélectionné à partir d'un éther de glycol, d'un acétate d'éther de glycol et de la γ-butyrolactone.

7. Composition de solvant de libération selon la revendication 6, dans laquelle, lorsqu'un poids de l'alcool aromatique est représenté par B et un poids d'au moins un sélectionné à partir de l'éther de glycol, de l'acétate d'éther de glycol et de la γ-butyrolactone est représenté par C, un rapport pondéral (C/B) d'au moins un sélectionné à partir de l'éther de glycol, de l'acétate d'éther de glycol et de la γ-butyrolactone sur l'alcool aromatique est supérieur à 20/80 et inférieur à 80/20.

8. Composition de solvant de libération selon la revendication 6 ou 7, dans laquelle au moins un sélectionné à partir de l'éther de glycol, de l'acétate d'éther de glycol et de la γ-butyrolactone est au moins un à partir du 3-méthoxy-3-méthylbutanol et du 3-méthoxy-3-acétate de méthylbutyle.

9. Composition de solvant de libération selon l'une quelconque des revendications 1 à 8, comprenant en outre un antioxydant phénolique.

10. Procédé de libération comprenant :
une étape d'immersion consistant à immerger l'article moulé en résine thermoplastique sur lequel le film de revêtement en résine thermodurcissable est appliqué en revêtement dans la composition de solvant de libération selon l'une quelconque des revendications 1 à 9 et à libérer le film de revêtement en résine thermodurcissable ;
une étape de nettoyage consistant à rincer et à nettoyer à la vapeur la composition de solvant de libération restant sur l'article moulé en résine thermoplastique et/ou le film de revêtement en résine thermodurcissable après l'étape d'immersion avec un solvant qui contient du 1,1,2,2,3,3,4-heptafluorocyclopentane en tant qu'ingrédient principal ; et
une étape de séchage consistant à sécher l'article moulé en résine thermoplastique et/ou le film de revêtement en résine thermodurcissable après l'étape de nettoyage.

11. Composition de solvant de nettoyage comprenant :
du 1,1,2,2,3,3,4-heptafluorocyclopentane et un premier alcool aromatique, dans laquelle la composition de solvant de nettoyage n'ayant pas de point d'éclair.

12. Composition de solvant de nettoyage selon la revendication 11, dans laquelle lorsqu'un poids du 1,1,2,2,3,3,4-heptafluorocyclopentane est représenté par A et un poids du premier alcool aromatique est représenté par B, un rapport pondéral (A/B) du 1,1,2,2,3,3,4-heptafluorocyclopentane sur le premier alcool aromatique est supérieur à 30/70 et inférieur à 90/10.

13. Composition de solvant de nettoyage selon la revendication 11 ou 12, dans laquelle le premier alcool aromatique comprend au moins l'un de l'alcool benzylique et de l'alcool phénéthylique.

14. Composition de solvant de nettoyage selon l'une quelconque des revendications 11 à 13, comprenant en outre un alcool qui forme un mélange azéotropique avec le 1,1,2,2,3,3,4-heptanuorocyclopentane.

15. Composition de solvant de nettoyage selon la revendication 14, dans laquelle l'alcool est l'alcool tert-amylique.

16. Composition de solvant de nettoyage selon l'une quelconque des revendications 11 à 15, comprenant en outre un antioxydant phénolique.

17. Composition de solvant de nettoyage selon l'une quelconque des revendications 11 à 16, comprenant en outre un éther ayant une structure dans laquelle un deuxième alcool aromatique est condensé avec un troisième alcool aromatique ou un alcool aliphatique.

18. Composition de solvant de nettoyage selon la revendication 17, dans laquelle lorsqu'un poids du premier alcool aromatique est représenté par B et un poids de l'éther est représenté par F, un rapport pondéral (B/F) du premier alcool aromatique sur l'éther est supérieur à 80/20 et inférieur à 1/99.

19. Composition de solvant de nettoyage selon la revendication 17 ou 18, dans laquelle l'éther inclut au moins un éther de dibenzyle et un éther de méthylbenzyle.
